# EUROPÄISCHE PATENTANMELDUNG

(11) **EP 3 528 022 A1**
(43) Veröffentlichungstag der Anmeldung: **21.08.2019**
(21) Anmeldenummer: 18020063.6
(22) Anmeldetag: 15.02.2018
(51) Int. Cl.: G02B 6/44

(54) **SPLEISSMODUL MIT PATCHEINHEIT**

(71) Anmelder: ZweiCom-Hauff GmbH, 73494 Rosenberg (DE)
(72) Erfinder: FELTGEN, Reinhard, 73489 Jagstzell (DE)
(74) Vertreter: König Szynka Tilmann von Renesse Patentanwälte Partnerschaft mbB

(57) **Zusammenfassung**

Die Erfindung betrifft ein Spleißmodul für LWL-Kabel mit Spleißstellenablagen und einer Patcheinheit, wobei das Spleißmodul spiegelsymmetrisch aufgebaut ist.

## Beschreibung

Die Erfindung betrifft ein Spleißmodul für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden zunehmend Einsatz. Insbesondere werden zunehmend die LWL-Kabelnetze bis zum Verbraucher verlegt oder sogar bis zum Endgerät im Haushalt oder Büro. Mit dem zunehmenden Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleißstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlussfasern (Pigtails) auf lösbare Anschlusselemente (etwa Stecker und Kupplungen) geführt werden. Dort können dann zur Weiterführung der Glasfaserverbindungen LWL-Kabel mit Verbindungselementen (etwa Steckern) eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Ausdruck nicht translatorisch auszuziehen, sondern um eine Drehachse. Beispielhaft kann verwiesen werden auf die EP 2 669 726 A1. Dieser Stand der Technik zeigt auch eine Patcheinheit auf einer Vorderseite des dargestellten Spleißmoduls mit insgesamt 2 x 12 lösbaren Steckverbindungen.

Der Erfindung liegt die Aufgabe zugrunde, ein hinsichtlich der praktischen Handhabung verbessertes Spleißmodul anzugeben.

Diese Aufgabe wird gelöst durch ein Spleißmodul für LWL-Kabel mit einer Vielzahl Spleißstellenablagen in dem Spleißmodul, einer Patcheinheit, die eine Vielzahl Patchstellen mit jeweils einer lösbaren Verbindungseinrichtung für ein jeweiliges LWL-Kabel aufweist, und einer Trägerplatte, auf der die Spleißstellenablagen und die Patcheinheit direkt oder indirekt gehalten sind, dadurch gekennzeichnet, dass das Spleißmodul spiegelsymmetrisch ist bezüglich einer Mittelebene, die zu der Trägerplatte senkrecht und zu einer lokalen Kabelrichtung an der Patcheinheit parallel ist, und in verbesserter Ausgestaltung durch die verschiedenen abhängigen Ansprüche. Ferner bezieht sich die Erfindung auch auf einen Spleißmodulstapel nach Anspruch 11, einen Verteilerschrank nach Anspruch 12 mit einer Mehrzahl solcher Spleißmodule und schließlich auf eine vorteilhafte Verwendung nach Anspruch 13.

Die Grundidee der Erfindung besteht in einem spiegelsymmetrischen Aufbau des Spleißmoduls, jedenfalls soweit es die für die LWL-Kabelführung relevanten Elemente des Spleißmoduls betrifft. Dabei sind die LWL-Kabel selbst nicht gemeint, denn diese können im Einzelfall (und von Fall zu Fall abweichend) individuell und damit asymmetrisch verlegt werden.

Die Symmetrie betrifft eine Ebene, die einerseits die (lokale) Kabelrichtung an der Patcheinheit enthalten soll (d h. parallel dazu liegen soll) und andererseits zu einer Trägerplatte, die die Grundstruktur des Spleißmoduls bildet, senkrecht stehen soll. Bei einem üblichen horizontal angeordneten Spleißmodul handelt es sich also um eine vertikale Mittelebene und aus der Perspektive eines Nutzers im Regelfall um eine Rechts-Links-Symmetrie. Das gilt jedenfalls, wenn der Betrachter, wie häufig, vor der vor ihm quer verlaufenden Patcheinheit steht. Es sollen aber Fälle mit anderer Anordnung des Spleißmoduls, insbesondere vertikaler Ausrichtung, mit inbegriffen sein. Dann wäre die Symmetrieebene eine horizontale Ebene.

Die symmetrische Gestaltung hat den Vorteil, dass sich das Spleißmodul je nach individuellen baulichen Verhältnissen optimal anpassen lässt auf Verhältnisse, die von Einzelfall zu Einzelfall eine entsprechende Veränderung von rechts nach links oder von oben nach unten bedeuten, also z. B. eine Patchkabelweiterleitung nach rechts oder nach links, eine Zuleitung der zu spleißenden Kabel von rechts oder von links, einen Einsatz in einem Verteilerschrank mit rechtsanschlagender oder mit linksanschlagender Tür etc.. Das gilt natürlich gleichermaßen für eine Oben-Unten-Vertauschung, wobei im Folgenden der hier bevorzugte Fall einer horizontalen Orientierung des Spleißmoduls und damit einer Rechts-Links-Symmetrie dargestellt wird.

Die Erfindung betrifft vor allem eine Ausbildung des Spleißmoduls als Drehlade, also mit einer Drehachse, typischerweise seitlich vorn. Die erfindungsgemäße Symmetrie ist dann im Sinn einer wählbaren Drehachsposition rechts oder links (bzw., vergleiche oben, bei vertikal orientiertem Spleißmodul mit horizontal verlaufender Achse oben oder unten) zu verstehen. Es können insbesondere Aufnahmen am Spleißmodul für das Montieren (z. B. Durchstecken) eines Drehachsstifts rechts oder links vorhanden sein und im Fall der Integration in einem weitergehenden baulichen Zusammenhang dann auch an entsprechender weiterer Stelle.

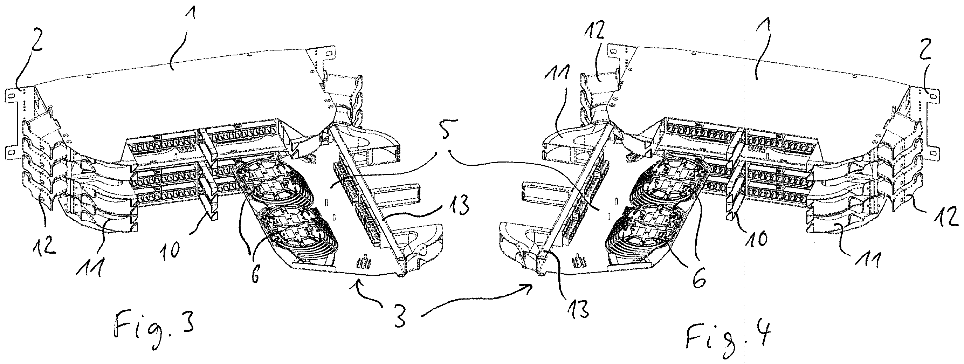

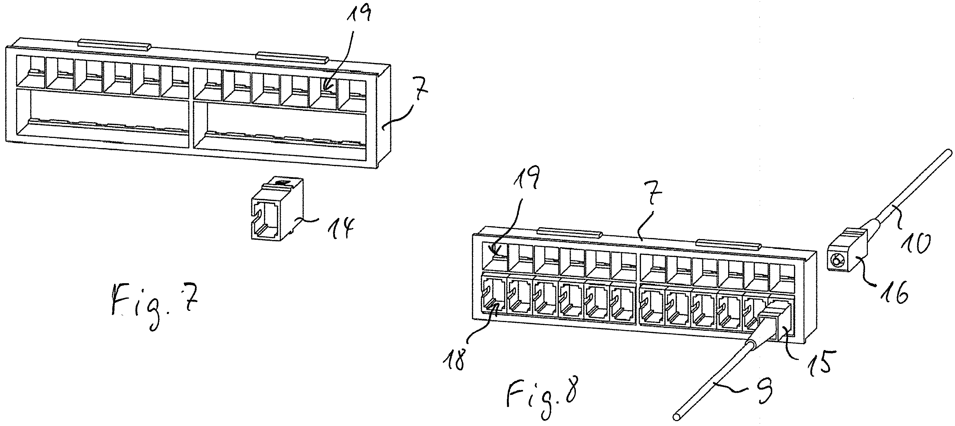

Der Nutzer kann somit bei der Montage noch festlegen, ob sich die Drehlade nach rechts oder links herausfahren lässt und damit z. B. auf den Anschlag und den Drehsinn der Tür eines Verteilerschranks Rücksicht nehmen. Es kann aber z. B. auch gewünscht sein, LWL-Kabel möglichst drehachsennah zu verlegen, um sie möglichst wenig durch die Drehbewegungen mit Kräften oder Verschiebestrecken zu beaufschlagen. Insoweit kann auch unabhängig von der Verteilerschranktür die Kabelführung eine gewisse Präferenz bedingen. Zur Veranschaulichung kann auf die EP 2 669 726 A1 verwiesen werden, bei der die Drehachse auf die Position vorn rechts (Bezugszeichen 7) festgelegt ist und auch sonst kein symmetrischer Aufbau existiert, vergleiche etwa den Abstand der Einzelteile der Patcheinheit von den seitlichen Rändern, die vordere Abdeckplatte 22 etc. Die Figuren 4 bis 7 darin verdeutlichen eine beispielhafte Kabelführung in den Spleißmodulen und Figur 8 zeigt eine solche in einem kompletten Verteilerschrank.

Eine bevorzugte Ausgestaltung sieht eine Unterbringung der Spleißstellenablagen in zumindest einer Kassette vor, und zwar vorzugsweise mit einer Mehrzahl Spleißstellenablagen pro Kassette, z. B. zwei (in/out) oder vier (dito mit Reserveablageplätzen). Die Kassetten können senkrecht zu ihrer flächigen Erstreckung und vorzugsweise in der Richtung der Drehachse gestapelt sein zu Stapeln von z. B. sechs Kassetten. Der symmetrische Aufbau kann dabei eine mittige und symmetrische Anordnung der Kassette(n) bedeuten, bei der die Symmetrieebene durch die Kassette(n) läuft. Alternativ oder außerdem können Kassetten oder Kassettenstapel außerhalb der Symmetrieebene und dementsprechend doppelt und beidseits angeordnet sein. Eine Kombination beider Gedanken könnte z. B. drei Kassetten(stapel) nebeneinander bedeuten, bei der die Symmetrieebene durch die mittlere bzw. den mittleren läuft.

Die Patcheinheit ist ebenfalls von der Symmetrieanforderung betroffen. Vorzugsweise handelt es sich um eine Reihe einzelner Patchstellen (oder eine Mehrzahl Reihen), welche von der Symmetrieebene geteilt wird und dementsprechend mittig liegt. Dabei ist eine aus der Sicht eines Bedieners frontnahe Anordnung bevorzugt und bei der ebenfalls bevorzugten horizontalen Ausrichtung des Spleißmoduls mithin eine horizontale (Quer-)Ausrichtung der Patcheinheit.

Die Patcheinheit kann dabei außer den Patchstellen auch noch weitere für die Kabelführung relevante Stellen enthalten, worauf weiter unten noch näher eingegangen wird.

Die Patcheinheit ist vorzugsweise an einer Frontplatte angebracht, z. B. in Form von in Öffnungen in der Frontplatte eingesetzten lösbaren Anschlusselementen. Die Frontplatte ist dabei vorzugsweise gewinkelt zu einer Trägerplatte vorgesehen und kann dabei einstückig mit dieser oder daran angesetzt ausgebildet sein. Die Trägerplatte wiederum trägt die Spleißstellenablagen.

Die Frontplatte ist dabei vorzugsweise in der Nähe oder an einem Rand der Trägerplatte vorgesehen und von der Seite dieses Randes (von außen) aus direkt zugänglich und nicht etwa durch eine Abdeckplatte verdeckt, wie sie bspw. mit dem Bezugszeichen 22 in der bereits zitierten EP 2 669 726 A1 gezeigt ist. Solche Abdeckplatten finden sich auch sonst im Stand der Technik, erschweren aber den Zugang zur Patcheinheit.

Gemäß einer weiteren bevorzugten Ausgestaltung weist die Patcheinheit zusätzlich zu den Patchstellen sogenannte Durchgangsstellen ohne lösbare Verbindungseinrichtungen (insbesondere Steckelemente) und stattdessen für den Durchgang je eines durchlaufenden LWL-Kabels durch eine jeweilige Öffnung auf. Dabei sollen die Durchgangsstellen und die Patchstellen nächstbenachbart zueinander sein.

Es hat sich nämlich herausgestellt, dass nicht nur immer wieder Bedarf am Durchführen nicht unterbrochener LWL-Kabel besteht, sondern dass die Installation der Kabel besonders leicht und übersichtlich gerät, wenn solche durchlaufenden Kabel möglichst nah an einer zugeordneten Patchstelle liegen bzw. wenn möglichst nah an einer solchen Patchstelle eine entsprechende Öffnung vorhanden ist. Dann kann beim Installieren ein Kabel wahlweise getrennt und mit den üblichen lösbaren Anschlusselementen, insbesondere Steckern, an einer Patchstelle wieder verbunden werden. Es kann aber stattdessen auch ohne Trennung durch die Durchgangsstelle geführt werden.

Insbesondere bleibt eine unmittelbare räumliche Beziehung zwischen den Patchstellen und den Durchgangsstellen erhalten, sodass auch bei nachträglichen Änderungen, etwa der Auftrennung eines zunächst ungetrennten LWL-Kabels, (eine Freihaltung vorausgesetzt) eine benachbarte Patchstelle zur Verfügung steht. Die räumliche Anordnung der Kabel muss dann also möglichst wenig geändert werden und die Verlegung bleibt auch bei nachträglichen Änderungen klar und übersichtlich. Das gilt auch umgekehrt, wenn nämlich zunächst getrennte LWL-Kabel, die an einer Patchstelle verbunden sind, durch durchgehende LWL-Kabel ersetzt werden sollen.

Z. B. können bei der Installation kundenabhängige Präferenzen vorliegen. So kann z. B. ein technischer Betrieb oder eine Bankfiliale als Kunde wegen erhöhter Sicherheit die Vermeidung von Patchstellen (Steckverbindungen) vorziehen, wohingegen z. B. Privathaushalte als Kunden Patchstellen wegen der leichten Umsteckbarkeit zugewiesen bekommen, um z. B. von einem Telekommunikationsanbieter leichter zu einem anderen wechseln zu können. Wenn nun z. B. ein Gewerbegebäude in ein Wohngebäude umgewandelt oder an Mieter mit anderen Anforderungen neu vermietet wird, kann erfindungsgemäß sehr leicht die jeweilige Präferenz berücksichtigt werden.

Ferner können im Rahmen der Erfindung auch sogenannte Duplex-Patchstellen Verwendung finden. Dabei werden besonders kleine lösbare Verbindungselemente (Steckelemente) eingesetzt werden, die paarweise zusammen in eine Rastaufnahme (oder andere Aufnahme) für ein (konventionelles) Verbindungselement passen. Es werden also auf der eigentlich für eine Patchstelle vorgesehenen Fläche zwei Patchstellen untergebracht, sodass die Zahl der einzelnen Kabel verdoppelt werden kann. Die Kabel bleiben dabei aber individuell geführt und an den Patchstellen verbunden. In solchen Fällen wird die Zahl der Durchgangsstellen dementsprechend vorzugsweise auch verdoppelt.

"Nächstbenachbart" meint dabei, dass es von einer Patchstelle ausgehend (und bezüglich einer Richtung quer zur lokalen LWL-Kabelrichtung) zwar andere Patchstellen geben darf, die noch näher liegen als die nächsten Durchgangsstellen, dass aber nicht alle übrigen Patchstellen näher liegen als die nächste Durchgangsstelle. Es gibt also mindestens eine weiter entfernte Patchstelle.

Vorzugsweise sind höchstens 10 und besonders bevorzugterweise höchstens 9, 8, 7, 6, 5, 4, 2 oder sogar nur eine Patchstelle näher benachbart als die nächste Durchgangsstelle. Das Gleiche gilt vorzugsweise umgekehrt, also von einer Durchgangsstelle ausgehend, und gilt vorzugsweise für alle Patchstellen und/oder für alle Durchgangsstellen.

Vorzugsweise soll der Abstand zwischen einer Durchgangsstelle und der nächsten Patchstelle und umgekehrt (wieder in der Richtung senkrecht zur lokalen LWL-Kabelrichtung) möglichst gering sein auch bezüglich eines von dem Abstand zur nächsten gleichartigen Stelle unabhängigen Maßes. Dabei bietet sich als Maß ein typischer Durchmesser eines lösbaren Verbindungs- oder Anschlusselements in der genannten Richtung an. Wenn z. B. der Stecker dabei unrund ist, ist ein gemittelter Durchmesser gemeint. Bevorzugt sind dabei Abstände von höchstens 5 und vorzugsweise höchstens 4 oder sogar höchstens 3 solche Durchmesser. Als Position gilt jeweils die Mitte des LWL-Kabels.

Ferner ist bevorzugt, dass die Patchstellen und Durchgangsstellen in einer 1:1-Entsprechung vorliegen. Dies ist zunächst auf die beschriebene nächste Nachbarschaft bezogen und bedeutet somit, dass (quasi in einer bijektiven Beziehung) jeder Patchstelle eine nächstbenachbarte (im obigen Sinn) Durchgangsstelle zuzuordnen ist und umgekehrt. Daraus ergibt sich auch, dass die Patchstellen und Durchgangsstellen in gleicher Zahl vorliegen.

Bei praktisch relevanten und hier auch bevorzugten Ausgestaltungen ergibt sich eine Patchstelle durch ein von der Seite der Spleißstellenablage aus bereits eingeführtes, aber an sich lösbares Anschlusselement, bspw. ein Steckelement, und zwar am der Patcheinheit zugewandten Ende eines Pigtails. Dieses Element kann in eine entsprechende Aufnahme (z. B. eine Rastaufnahme) an der Patcheinheit eingeführt sein und damit dort eine Patchstelle bilden, in die von der anderen Seite ein komplementäres Verbindungselement eines Patchkabels eingeführt werden kann. In diesen Fällen liegt also das Pigtailkabel bereits vor und verbindet im Regelfall die Patchstelle mit einer entsprechenden Spleißkassette, in der allerdings noch keine Spleißstelle gebildet und abgelegt ist.

Der Anwender verwendet ein solches Spleißmodul, indem er einerseits die Spleißstelle an dem entsprechenden Ende des Pigtails herstellt und in der Spleißkassette ablegt (und das angeschlossene LWL-Kabel aus der Spleißkassette entsprechend weiterführt); ferner schließt der Anwender an der zugehörigen Patchstelle ein Patchkabel von der anderen Seite an. Wenn er das bevorzugt, kann er stattdessen durch die zugehörige Durchgangsstelle ein ununterbrochenes Patchkabel hindurchziehen und mit diesem die Spleißstelle bilden und ablegen. Dann kann das Pigtail ungenutzt liegenbleiben, um den beschriebenen denkbaren späteren Wechsel zur Patchstelle zu erleichtern.

Eine bevorzugte Anordnung der Patch- und Durchgangsstellen ist in Reihen aufgebaut, und zwar zumindest eine Reihe für jede Sorte. Diese können parallel zueinander verlaufen, wobei ein relativ geringer Abstand dazwischen bevorzugt ist. Bevorzugte Abstandskriterien hierzu entsprechen den oben für den Nächstnachbarabstand mit Bezug auf den Anschlusselementdurchmesser formulierten Kriterien (hier als Reihenabstand). Insbesondere kann es dabei eine direkte Zuordnung zwischen sich lediglich durch den Versatz zwischen den Reihen entsprechenden und ansonsten analog positionierten Durchgangs- und Patchstellen geben (also mit einem Reihenversatz senkrecht zur jeweiligen Reihenrichtung).

Eine weitere Möglichkeit sieht eine alternierende Folge vor. Dabei wechseln sich also Durchgangsstellen und Patchstellen entlang einer Reihe ab, vorzugsweise einzeln abwechselnd, aber möglicherweise auch in Paaren abwechselnd. Solche Reihen können zusätzlich mehrfach nebeneinander vorliegen, wobei vorzugsweise die jeweilige Anordnung der Durchgangsstellen und der Patchstellen innerhalb der Reihen (unter Berücksichtigung des Versatzes quer zur Reihenrichtung) jeweils identisch ist.

Für die Durchgangsstellen können Klemmeinsätze vorgesehen sein, also Klemmkörper, die zur klemmenden Halterung eines durchlaufenden LWL-Kabels in der Öffnung einer Durchgangsstelle dienen. Dabei kann es sich bei den Klemmkörpern und/oder auch den Anschlusselementen z. B. um Spritzgussteile, Zinkdruckgussteile, Kohlefaserteile etc. handeln.

Z. B. kann ein Klemmkörper gemäß der EP 3 182 186 eingesetzt werden. Ein solches Kabelzugabfangelement weist elastische Rastelemente außen an einem Grundkörper auf, die an der Frontplatte verrasten können. Ferner ist ein zylindrisches Kabelführungsröhrchen in dem Grundkörper vorgesehen, das an den Enden herausragt. Der Grundkörper mit den Rastelementen und/oder dem Röhrchen kann einstückig z. B. als Spritzgußelement ausgebildet sein und zur Vereinfachung hinsichtlich mindestens einer und vorzugsweise zwei oder drei Mittelebenen symmetrisch sein. Er kann z. B. passend sein zu einer standardisierten Aufnahme eines LC-, SC- oder E-2000-Steckverbinders.

Oben wurde bereits darauf verwiesen, dass sogenannte Duplex-Patchstellen verwendet werden können. Dann bietet es sich an, entsprechend verkleinerte Klemmeinsätze vorzusehen, die ebenfalls zu zweit in einen entsprechenden Platz passen und damit für die nötige Verdopplung der Durchgangsstellen sorgen.

Ferner sind, wie bereits ausgeführt, vorzugsweise Spleißkassettenstapel vorgesehen, die ihrerseits wiederum in einer Mehrzahl in einem Verteilerschrank vorgesehen sein können.

Bei der Verwendung eines erfindungsgemäßen Spleißmoduls werden die LWL-Kabel vorzugsweise jeweils alternativ entweder durch eine Patchstelle oder eine nächstbenachbarte Durchgangsstelle geführt, aber nicht durch beide jeweils ein LWL-Kabel. Damit bleibt bei der Benutzung der Durchgangsstelle die Patchstelle zur späteren Verwendung frei und umgekehrt. Es ist also insbesondere möglich, Kabel zunächst durchgehend zu verlegen und dann mit minimaler Störung des Ordnungssystems und minimalem Aufwand für den Installateur später zu trennen und auf eine Patchstelle zu setzen. Wie bereits erläutert können natürlich auch einmal getrennte LWL-Kabel später durch durchgehende ersetzt werden, etwa um auf besondere Sicherheitsbedürfnisse eines Kunden einzugehen, wobei dann natürlich neu eingefädelt werden muss.

Die Erfindung wird im Folgenden anhand eines Ausführungsbeispiels näher erläutert. Dabei zeigt:
- Fig. 1: eine perspektivische Ansicht eines Stapels erfindungsgemäßer Spleißmodule übereinander;
- Fig. 2: den Spleißmodulstapel aus Fig. 1, wobei ein Spleißmodul nach vorn rechts herausgedreht ist;
- Fig. 3: eine analoge Ansicht, jedoch mit leicht verdrehter Perspektive;
- Fig. 4: eine zu Fig. 2 analoge Ansicht, jedoch mit um eine abweichende Drehachse herausgedrehtem Spleißmodul;
- Fig. 5: eine zu Fig. 1 analoge Ansicht, jedoch mit zwei zur Veranschaulichung eingezeichneten Drehachsenstiften;
- Fig. 6: eine perspektivische Ansicht eines der Spleißmodule aus dem Stapel gemäß den Fig. 1 bis 5;
- Fig. 7: einen Teil einer Patcheinheit des Spleißmoduls aus Fig. 6;
- Fig. 8: eine zu Fig. 7 analoge Ansicht, jedoch mit eingesetzten Halterungen für Steckverbindungselemente und zwei solchen Steckverbindungselementen mit jeweils anhängendem LWL-Kabel;
- Fig. 9: eine weitere solche Ansicht mit vollständig belegten Patchstellen mit jeweiligen Steckverbindungselementen;
- Fig. 10: eine zur Fig. 9 analoge Ansicht, wobei jedoch eine Patchstelle kabelfrei und stattdessen ein Kabel durch eine nächstbenachbarte Durchgangsstelle geführt ist;
- Fig. 11: eine analoge Ansicht zu Fig. 10, wobei das Kabel in der Durchgangsstelle durch ein Klemmelement festgelegt ist.

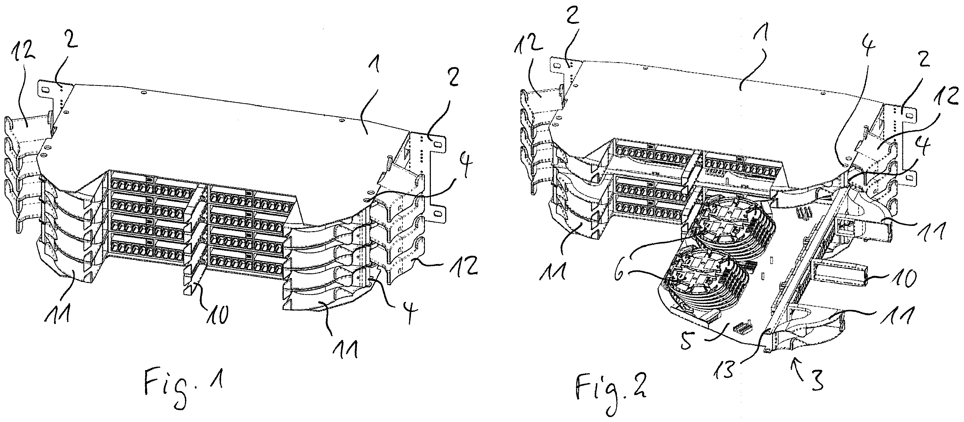

Fig. 1 zeigt in perspektivischer Darstellung von oben schräg rechts vorn einen Spleißmodulstapel aus vier vertikal übereinander gestapelten Spleißmodulen, die jeweils vertikal angeordnet sind. Im Spleißmodulstapel werden die vier Spleißmodule dabei durch einen Blechrahmen mit einer oberen Platte 1, einer Hinterwand mit seitlichen Befestigungslaschen 2 und einer nicht sichtbaren und zur Wand 1 analogen Unterwand zusammengehalten. Fig. 1 zeigt dabei bereits, dass der Spleißmodulstapel und die einzelnen Spleißmodule darin zu einer vertikalen Mittelebene (die von vorn nach hinten verläuft) spiegelsymmetrisch aufgebaut ist, also eine Rechts-links-Symmetrie aufweisen.

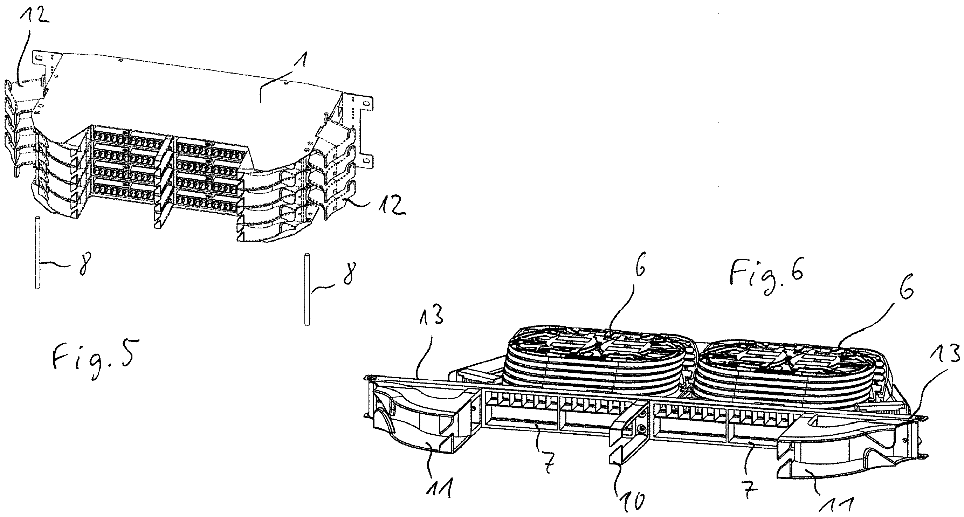

Fig. 2 zeigt den Spleißmodulstapel aus Fig. 1, wobei das zweitoberste Spleißmodul 3 um eine rechts vorn liegende Drehachse 4 (vgl. Fig. 5) herausgeschwenkt ist, also von oben betrachtet gegen den Uhrzeigersinn und um ungefähr 90°. Die übrigen drei Spleißmodule sind analog aufgebaut und analog verschwenkbar, und zwar alle um dieselbe Drehachse 4.

Das Spleißmodul 3 weist eine horizontal liegende und aus Blech gefertigte Trägerplatte 5 auf, auf der im (bezogen auf den eingedrehten Zustand) hinteren Teil zwei spiegelsymmetrisch nebeneinander liegende Spleißkassettenstapel gehalten sind, die jeweils sechs Spleißkassetten 6 enthalten. Die Spleißkassetten 6 in den Stapeln sind um eine hinten quer liegende Achse hochklappbar und erlauben damit einen Zugriff auf weiter unten liegende Kassetten. Sie sind jeweils in sich spiegelsymmetrisch bezüglich einer weiteren Mittelebene (parallel zur Hauptsymmetrieebene) durch ihre Mitte aufgebaut und demzufolge auch spiegelsymmetrisch zueinander (von Stapel zu Stapel). In jeder Kassette 6 der beiden Stapelkönnen vier Spleißstellen abgelegt werden, wobei im Regelfall jedem Anschluss eine Kassette zugeordnet ist, sodass zwei Speißstellenablagen (in/out) belegt sind, zwei weitere werden als Reserve freigehalten.

Das Blech der Trägerplatte 5 ist im vorderen Bereich um 90° hochgebogen und bildet damit eine querlaufende Frontplatte 13. Diese enthält jeweils rechteckige und zueinander spiegelsymmetrische Ausschnitte, in die Einsätze 7 gemäß den Fig. 7 ff (Spritzgussteile) eingesetzt sind, vgl. auch Fig. 6.

Diese Einsätze 7 werden anhand der Fig. 7 ff näher erläutert. Sie sind über in Fig. 7 oben gut sichtbare Rastvorsprünge in entsprechenden Ausnehmungen in der Blechfrontplatte 13 gehalten.

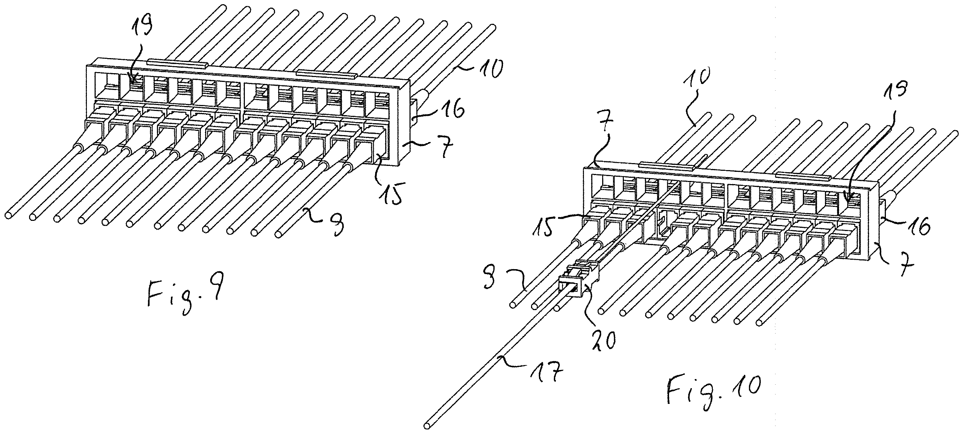

Wie sich aus Fig. 9 ergibt, dienen sie der eingangs bereits geschilderten Unterbringung von Patchstellen 18, also dem Übergang zwischen den Pigtails und der weiterführenden Patch-Kabeln. Diese Kabel sind in den Fig. 1 bis 7 nicht gezeigt. Allerdings verlaufen die Pigtails, wie sich z. B. auch aus den eingangs zitierten Anmeldungen ergibt, innerhalb des Spleißmoduls 3 und über der Trägerplatte 5 zu den einzelnen Spleißkassetten 6 in den beiden Stapeln, wobei es eine entsprechende Zuordnung zwischen den Patchstellen 18 und den Spleißkassetten gibt (zwei Patchstellen 18 pro Spleißkassette).

Dabei ist es, wie die Figuren verdeutlichen, vollkommen gleichgültig, ob die Kabel in einer bestimmten Anordnung oder in einer dazu rechts-links-vertauschten Anordnung verlegt werden, weil nämlich das Spleißmodul 3 und auch alle anderen Spleißmodule entsprechend symmetrisch ausgeführt sind. Das Gleiche gilt für den gesamten in den Figuren dargestellten Stapel. Es gilt auch für die in den Fig. 2 und 3 erkennbare Drehbarkeit, die gemäß Fig. 4 mit links vorn liegender Drehachse gelöst sein kann, wozu entsprechend Fig. 5 ein dort unter dem Spleißmodulstapel dargestellter Drehachsstift 8 in entsprechende Löcher rechts oder links eingeschoben wird.

Damit ist es insbesondere möglich, die gemäß Fig. 9 bis 11 nach vorne herauslaufenden LWL-Kabel 9 vor der Frontplatte 13 nach rechts oder nach links weiterzuführen. Dazu sind vor der Frontplatte 13 als Kunststoffspritzgussteile realisierte Elemente 10 und 11 vorgesehen, und zwar eine mittige rahmenartige Klammer 10, die von einem rechten Einsatz 7 ausgehende LWL-Kabel 9, die nach links umgelenkt werden, zusammenfassen kann, oder umgekehrt. Dazu ist die Klammer 10 flexibel und erlaubt ein Hindurchführen der einzelnen Kabel durch den vorn eingezeichneten schrägen Schlitz. Ferner werden die LWL-Kabel 9 dann gemeinsam durch einen doppelt gebogenen Kanal in einem seitlichen Element 11 geführt, das symmetrisch und beidseits vorgesehen ist und je nach individueller Wahl nur auf einer Seite benutzt wird. Üblicherweise ist dabei bevorzugt, die LWL-Kabel 9 nah der Drehachse 4, also bei rechtsliegender Drehachse durch das rechte Element 11 und bei linksliegender Drehachse durch das linke Element 11 zu führen. Die Fig. 1 bis 5 zeigen ferner fächerartige und ebenfalls als Kunststoffspritzgussteile ausgeführte Elemente 12 rechts und links an den einzelnen Spleißmodulen zur Weiterführung der LWL-Kabel 9 stromabwärts von den Elementen 11.

Auch der Innenaufbau der einzelnen Spleißmodule wie des Moduls 3 ist rechts-links-symmetrisch, und zwar bezüglich Frontplatte 13, Trägerplatte 5 und den Stapeln aus den Spleißkassetten 6.

Fig. 6 zeigt deutlich, dass in die Frontplatte 13 links und rechts von der Klammer 10 zwei Einsätze 7 gemäß Fig. 7 eingerastet sind. Diese enthalten in ihrem unteren Bereich eine horizontale Reihe aus insgesamt 12 Plätzen für Steckverbindungsaufnahmen 14, vgl. Fig. 8, die ihrerseits ebenfalls rastend in den Einsätzen 7 halten. In diese Steckverbindungsaufnahmen 14 können die an den Kabeln 9 und 10 vorgesehenen Steckverbindungselemente 15 und 16 eingesteckt werden, wobei im typischen Auslieferungszustand das von hinten (gem. Fig. 8 und typischer Nutzerperspektive) eingesteckte Element 16 in einem solchen Einsatz 14 gehalten ist und damit eine Buchse für das Element 15 bildet. In dieser Form können alle 12 Plätze besetzt werden, womit sich eine Reihe Patchstellen 18 ergibt, vgl. Fig. 9. Die Pigtails 10 führen dabei z. B. zu zweit zu je einer der Spleißkassetten 6 auf ihrer Seite (rechts oder links).

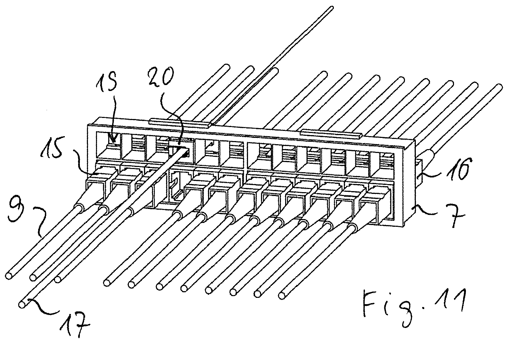

Wenn nun zu einem späteren Zeitpunkt oder von vornherein ein Kabel nicht aufgetrennt werden soll, wie z. B. das Kabel 17 in Fig. 10, so kann es durch eine der über den Patchstellen 18 angeordneten Durchgangsstellen 19 gezogen werden, wie die Fig. 10 und 11 zeigen. Dabei kann ein Klemmelement 20 Verwendung finden, das einerseits in der Durchgangsstelle hält und andererseits das Kabel 17 zur Zugentlastung klemmt. Dabei wird eine außerhalb des Spleißmoduls 3 vorhandene Schutzhülle des Kabels 17 in dem Klemmelement 20 verklemmt und nicht weiter in das Spleißmodul 3 geführt. Zu diesem Klemmelement 20 kann verwiesen werden auf die bereits zitierte EP 3 182 186. Insbesondere ist es möglich, die (oder bestimmte) Kabel 17 vorab durchgängig zu verlegen und erst nachträglich durch getrennte Kabel zu ersetzen bzw. aufzutrennen und dementsprechend steckbare Patchstellen 18 einzusetzen. Das entspricht einem Schritt von Fig. 11 zu Fig. 9.

Die Durchgangsstellen 19, optional mit den Elementen 20, sind dabei direkt über den zugeordneten Patchstellen 18 angeordnet und somit nächstbenachbart dazu. Der typische Abstand zwischen den jeweiligen Kabelmittelpunkten beträgt größenordnungsmäßig einen (gemittelten) Durchmesser eines Steckelements 15 oder 16 (in der Vertikalen). Man könnte sich natürlich auch vorstellen, die beiden horizontalen Reihen aus Patchstellen 18 und Durchgangsstellen 19 zu ersetzen durch z. B. jeweils zwei übereinander liegende Patchstellen und daneben zwei übereinander liegende Durchgangsstellen und dann wieder zwei übereinander liegende Patchstellen usw.. Das würde an der Nächstnachbarschaft nichts Wesentliches ändern.

Beide Varianten sorgen dafür, dass für ein umzusetzendes Kabel (vgl. die Fig. 9 und 11) mit minimaler Änderung des übrigen Kabelverlaufs eine alternative Durchgangsstelle (oder Patchstelle) für eine vorher benutzte Patchstelle (oder Durchgangsstelle) gefunden werden kann, sodass die Gesamtanordnung so übersichtlich wie möglich erhalten bleibt und nicht umsortiert werden muss.

Die Fig. 1 bis 6 zeigen im Vergleich zu den zitierten Dokumenten aus dem Stand der Technik deutlich, dass die Patchstellen 18 und die Durchgangsstellen 19 in der Frontplatte 13 der Spleißmodule von vorn optimal zugänglich sind und insbesondere keine weitere Abdeckung mehr stört (außer natürlich einer Schranktür oder dergleichen). Im Stand der Technik waren Abdeckplatten unterschiedlicher Bauform verbreitet, die aber beim Umsortieren und/oder Umwandeln von gepatchten zu durchgängigen LWL-Kabeln den Zugang erschweren.

Ferner kann man sich anhand z. B. der jeweils letzten Abbildungen und zugehörigen Erläuterungen in den zitierten Dokumenten leicht vorstellen, wie mehrere der in den Fig. 1 bis 5 dargestellten Spleißmodulstapel übereinander gestapelt in einem Verteilerschrank untergebracht sind. Der Verteilerschrank seinerseits kann, muss aber nicht, rechts-links-symmetrisch aufgebaut sein. Selbst bei nicht symmetrischem Aufbau kann es praktisch sein, den Anschlag (die Drehachslage) einer Verteilerschranktür wechseln zu können.

Unabhängig davon ist es jedenfalls von großem Vorteil, abhängig von den individuellen baulichen Gegebenheiten wählen zu können, ob die LWL-Kabelstränge zu den Patchstellen und zu den Spleißstellen nach rechts oder nach links weitergeführt werden, und dabei die Verlegung in den Spleißmodulen individuell wählen zu können.

## Patentansprüche

1. Spleißmodul (3) für LWL-Kabel (9,10) mit
einer Vielzahl Spleißstellenablagen in dem Spleißmodul (3),
einer Patcheinheit (7,14,16,18,19,20), die eine Vielzahl Patchstellen (14,18) mit jeweils einer lösbaren Verbindungseinrichtung (14) für ein jeweiliges LWL-Kabel (9) aufweist, und
einer Trägerplatte (5), auf der die Spleißstellenablagen und die Patcheinheit (3) direkt oder indirekt gehalten sind,
**dadurch gekennzeichnet, dass** das Spleißmodul (3) spiegelsymmetrisch ist bezüglich einer Symmetrieebene, die zu der Trägerplatte (5) senkrecht und zu einer lokalen Kabelrichtung an der Patcheinheit (7,14,16,18,19,20) parallel ist.

2. Spleißmodul (3) nach Anspruch 1, bei dem die Trägerplatte (5) mit den Spleißstellenablagen und der Patcheinheit (7,14,16,18,19,20) eine Drehlade bildet, die um eine vertikal zur Trägerplatte (5) verlaufende Drehachse (4) drehbar ist, wobei die Drehachse (4) außerhalb der Symmetrieebene an zwei wählbaren und zueinander symmetrischen Positionen gewählt werden kann.

3. Spleißmodul (3) nach einem der vorstehenden Ansprüche, bei dem die Spleißstellenablagen in jeweiligen Spleißkassetten (6) einer Mehrzahl Spleißkassetten (6) vorgesehen sind, vorzugsweise jeweils als Mehrzahl Spleißstellenablagen pro Kassette (6).

4. Spleißmodul nach Anspruch 3, bei dem die Symmetrieebene zumindest eine Kassette symmetrisch teilt.

5. Spleißmodul (3) nach Anspruch 3 oder 4, bei dem eine Mehrzahl Spleißkassetten (6) außerhalb der Symmetrieebene und dabei doppelt und symmetrisch angeordnet sind, vorzugsweise in zwei zueinander symmetrischen Kassettenstapeln.

6. Spleißmodul (3) nach einem der vorstehenden Ansprüche, bei dem die Patcheinheit (7,14,16,18,19,20) zumindest eine zu der Symmetrieebene symmetrische und von ihr geteilte Reihe aus Patchstellen (14,18) aufweist.

7. Spleißmodul (3) nach einem der vorstehenden Ansprüche, bei dem zusätzlich eine Frontplatte (13) vorgesehen ist, die zu der Trägerplatte (5) gewinkelt mit dieser verbunden ist und an welcher die Patcheinheit (7,14,16,18,19,20) angebracht ist.

8. Spleißmodul (3) nach Anspruch 7, bei dem die Frontplatte (13) mit der Patcheinheit (7,14,16,18,19,20), an einem Rand der Trägerplatte (5) oder zu einem Rand derselben benachbart vorgesehen ist und von der Seite dieses Randes aus direkt zugänglich ist, also insbesondere nicht durch eine Abdeckplatte verdeckt ist.

9. Spleißmodul (3) nach einem der vorstehenden Ansprüche, bei dem die Patcheinheit (7,14,16,18,19,20) zusätzlich Durchgangsstellen (19) ohne lösbare Verbindungseinrichtungen und stattdessen für den Durchgang je eines durchlaufenden LWL-Kabels (9,10,17) durch eine jeweilige Öffnung jeder Durchgangsstelle (19) aufweist, wobei vorzugsweise die Durchgangsstellen (19) und die Patchstellen (14,18) jeweils nächstbenachbart zueinander sind und vorzugsweise die Patchstellen (14,18) und die Durchgangsstellen (19) in horizontalen und zueinander parallelen Reihen, zumindest eine Reihe Patchstellen (14,18) und zumindest eine Reihe Durchgangsstellen (19), angeordnet sind.

10. Spleißmodul (3) nach Anspruch 9 mit einem Klemmeinsatz (20) zum Klemmen eines durchlaufenden LWL-Kabels (9,10,17) in einer Durchgangsstelle (19).

11. Spleißmodul (3) nach einem der vorstehenden Ansprüche, bei dem an den Patchstellen (14,18) jeweils lösbare Anschlusselemente (16) von zu jeweiligen Spleißstellenablagen führenden Pigtail-Kabeln (10) und ausgelegt zu Verbindungen mit komplementären lösbaren Anschlusselementen (15) jeweiliger Patchkabel (9) an den Patchstellen (14,18) vorliegen.

12. Spleißmodulstapel aus einer Mehrzahl übereinandergestapelten Spleißmodulen (3) nach einem der vorstehenden Ansprüche, wobei die Spleißmodule (3) vorzugsweise entlang der Richtung der Drehachse (4) nach Anspruch 2 und vorzugsweise senkrecht zu den jeweiligen Trägerplatten (5) der Spleißmodule (3) gestapelt sind.

13. Verteilerschrank mit einer Mehrzahl Spleißmodulstapel nach einem der vorstehenden Ansprüche, wobei vorzugsweise die Stapel in der Richtung einer Drehachse (4) nach Anspruch 2 gestapelte Spleißmodule (3) enthalten, welche vorzugsweise entlang dieser Richtung in einer Mehrzahl gestapelt sind, wobei vorzugsweise die Drehachse (4) vertikal liegt.

14. Verwendung eines Spleißmoduls (3) nach Anspruch 2, optional in Verbindung mit einem weiteren der Ansprüche 1 bis 10, oder eines Spleißmodulstapels nach Anspruch 12 in Verbindung mit Anspruch 2, bei welcher die Drehachse (4) vertikal steht.

## Geänderte Patentansprüche

### Geänderte Patentansprüche gemäss Regel 137(2) EPÜ.

1. Spleißmodul (3) für LWL-Kabel (9,10) mit
einer Vielzahl Spleißstellenablagen in einer Mehrzahl Spleißkassetten (6) in dem Spleißmodul (3),
einer Patcheinheit (7,14,16,18,19,20), die eine Vielzahl Patchstellen (14,18) mit jeweils einer lösbaren Verbindungseinrichtung (14) für ein jeweiliges LWL-Kabel (9) aufweist, und
einer Trägerplatte (5), auf der die Spleißstellenablagen in den Spleißkassetten (6) und die Patcheinheit (3) direkt oder indirekt gehalten sind
und die mit den Spleißstellenablagen in den Spleißkassetten (6) und der Patcheinheit (7,14,16,18,19,20) eine Drehlade bildet, die um eine vertikal zur Trägerplatte (5) verlaufende Drehachse (4) drehbar ist, wobei die Drehachse (4) außerhalb der Symmetrieebene an zwei wählbaren und zueinander symmetrischen Positionen gewählt werden kann,
wobei das Spleißmodul (3) spiegelsymmetrisch ist bezüglich einer Symmetrieebene, die zu der Trägerplatte (5) senkrecht und zu einer lokalen Kabelrichtung an der Patcheinheit (7,14,16,18,19,20) parallel ist,
**dadurch gekennzeichnet, dass** die Spleißkassetten (6) senkrecht zu ihrer flächigen Erstreckung und in der Richtung der Drehachse (4) zu Kassettenstapeln gestapelt sind, wobei die Kassettenstapel doppelt, zueinander symmetrisch und beidseits der Symmetrieebene angeordnet sind.

2. Spleißmodul (3) nach Anspruch 1, bei dem die Spleißstellenablagen jeweils als Mehrzahl pro Spleißkassette (6) vorgesehen sind.

3. Spleißmodul nach Anspruch 1 oder 2, bei dem die Symmetrieebene zumindest eine Spleißkassette symmetrisch teilt.

4. Spleißmodul (3) nach einem der vorstehenden Ansprüche, bei dem zwei zueinander symmetrische Kassettenstapel vorgesehen sind.

5. Spleißmodul (3) nach einem der vorstehenden Ansprüche, bei dem die Patcheinheit (7,14,16,18,19,20) zumindest eine zu der Symmetrieebene symmetrische und von ihr geteilte Reihe aus Patchstellen (14,18) aufweist.

6. Spleißmodul (3) nach einem der vorstehenden Ansprüche, bei dem zusätzlich eine Frontplatte (13) vorgesehen ist, die zu der Trägerplatte (5) gewinkelt mit dieser verbunden ist und an welcher die Patcheinheit (7,14,16,18,19,20) angebracht ist.

7. Spleißmodul (3) nach Anspruch 6, bei dem die Frontplatte (13) mit der Patcheinheit (7,14,16,18,19,20) an einem Rand der Trägerplatte (5) oder zu einem Rand derselben benachbart vorgesehen ist und von der Seite dieses Randes aus direkt zugänglich ist, also insbesondere nicht durch eine Abdeckplatte verdeckt ist.

8. Spleißmodul (3) nach einem der vorstehenden Ansprüche, bei dem die Patcheinheit (7,14,16,18,19,20) zusätzlich Durchgangsstellen (19) ohne lösbare Verbindungseinrichtungen aufweist, welche stattdessen für den Durchgang je eines durchlaufenden LWL-Kabels (9,10,17) durch eine jeweilige Öffnung jeder Durchgangsstelle (19) vorgesehen sind, wobei vorzugsweise die Durchgangsstellen (19) und die Patchstellen (14,18) jeweils nächstbenachbart zueinander sind und vorzugsweise die Patchstellen (14,18) und die Durchgangsstellen (19) in horizontalen und zueinander parallelen Reihen, zumindest eine Reihe Patchstellen (14,18) und zumindest eine Reihe Durchgangsstellen (19), angeordnet sind.

9. Spleißmodul (3) nach Anspruch 8 mit einem Klemmeinsatz (20) zum Klemmen eines durchlaufenden LWL-Kabels (9,10,17) in einer Durchgangsstelle (19).

10. Spleißmodul (3) nach einem der vorstehenden Ansprüche, bei dem an den Patchstellen (14,18) jeweils lösbare Anschlusselemente (16) von zu jeweiligen Spleißstellenablagen führenden Pigtail-Kabeln (10) vorliegen, welche ausgelegt sind zu Verbindungen mit komplementären lösbaren Anschlusselementen (15) jeweiliger Patchkabel (9) an den Patchstellen (14,18).

11. Spleißmodulstapel aus einer Mehrzahl übereinandergestapelten Spleißmodulen (3) nach einem der vorstehenden Ansprüche, wobei die Spleißmodule (3) vorzugsweise entlang der Richtung der Drehachse (4) nach Anspruch 2 und vorzugsweise senkrecht zu den jeweiligen Trägerplatten (5) der Spleißmodule (3) gestapelt sind.

12. Verteilerschrank mit einer Mehrzahl Spleißmodulstapel nach einem der vorstehenden Ansprüche, wobei vorzugsweise die Stapel in der Richtung der Drehachse (4) gestapelte Spleißmodule (3) enthalten, welche vorzugsweise entlang dieser Richtung in einer Mehrzahl gestapelt sind, wobei vorzugsweise die Drehachse (4) vertikal liegt.

13. Verwendung eines Spleißmoduls (3) nach einem der Ansprüche 1 bis 10 oder eines Spleißmodulstapels nach Anspruch 11, bei welcher die Drehachse (4) vertikal steht.
